Europäisches Patentamt

(19) European Patent Office

Office européen des brevets

(11) Publication number: **0 044 649**
**B1**

(12)                    **EUROPEAN PATENT SPECIFICATION**

(45) Date of publication of patent specification: **01.08.84**

(51) Int. Cl.³: **B 60 J 5/10**

(21) Application number: **81303048.3**

(22) Date of filing: **03.07.81**

(54) Vehicle tailgate assembly.

(30) Priority: **04.07.80 GB 8021998**

(43) Date of publication of application:
**27.01.82 Bulletin 82/4**

(45) Publication of the grant of the patent:
**01.08.84 Bulletin 84/31**

(84) Designated Contracting States:
**DE FR IT**

(56) References cited:
**DE - B - 2 658 745**
**FR - A - 2 334 553**
**FR - A - 2 378 666**
**FR - A - 2 447 311**
**GB - A - 1 448 892**
**GB - A - 2 050 479**
**US - A - 3 214 213**
**US - A - 4 261 612**

**REVUE AUTOMOBILE, vol. 73, no. 12, March 1978, M. STOOP "Les carrosseries spéciales, réves matérialises" under the heading "Au salon" refering to the OPEL citycar", page 5,6**

(73) Proprietor: **TALBOT MOTOR COMPANY LIMITED Administrative Centre P.O. Box 122A Abbey Road Whitley, Coventry, CV34GB (GB)**

(72) Inventor: **Ludford, Peter**
**27 Guthlaxton Avenue**
**Lutterworth Leicestershire LE17 4ET (GB)**
Inventor: **Attwood, Stanley**
**12 Hermitage Way**
**Kenilworth Warwickshire (GB)**

(74) Representative: **Bayliss, Geoffrey Cyril et al, BOULT, WADE & TENNANT 27 Furnival Street London EC4A 1PQ (GB)**

(56) References cited:
**REVUE AUTOMOBILE, vol. 70, no. 30, 11e feuille, 21-07-1977, The pictures undertitled "Le hayon arriere de la Chrysler Sunbeam est entièrement en verre" and "On remarque l'entraînement de l'essuie-glace.."**

Courier Press, Leamington Spa, England.

## Description

This invention relates to vehicle tailgate assemblies and in particular to vehicle tailgate assemblies which comprise a frameless glass tailgate panel having hinge means attached directly to the glass adjacent one edge of the panel to hinge the panel in the tailgate aperture of the vehicle and a locking device disposed adjacent an opposite edge of the panel for locking the panel in the closed position of the tailgate aperture.

Window structures for a motor vehicle body in which a frameless rear window has hinges and a securing latch mounted on the window glass are known. The window glass has to be of considerable strength in order to support other mechanisms such as window wiper mechanisms or it is necessary to mount only a part of the wiper mechanism on the window glass and provide the main drive mechanism with a detachable connection on the vehicle body itself as shown in GB—A—1448892.

The object of this invention is to provide a vehicle tailgate having a glass tailgate panel which does not require a frame but is capable of supporting other components or fittings without requiring a heavy glass panel to withstand the load imposed.

This invention provides a vehicle tailgate assembly comprising a frameless glass tailgate panel hinge means attached directly to the glass adjacent one edge of the panel to hinge the panel in the tailgate aperture of the vehicle and a locking device disposed adjacent an opposite edge of the panel for locking the panel in the closed position in the tailgate aperture, characterised in that a mounting member is provided which extends along the length of the inner side of said opposite edge of the panel and in that the locking device is provided with means for securing the mounting member to the panel.

The mounting member may be used for mounting door fittings such as a window wiper and a counter-balance strut on the glass panel.

The following is a description of some specific embodiments of the invention, reference being made to the accompanying drawings in which:

Figure 1 is an exploded perspective view of one embodiment of the invention;

Figure 2 is a sectional view of part of the embodiment taken along lines 2—2 in Figure 1; and

Figure 3 is a sectional view similar to Figure 2 showing a modified form of the embodiment.

A frameless glass pane 10 comprising a tailgate assembly for a vehicle is hinged at its upper edge for pivotable movement about an axis extending transversely of a vehicle by a pair of hinges 11, one element 12 of which is secured to the glass and the other element 13 to a part of the vehicle rear structure. The underside only of the glass within the peripheral marginal edges 14, 15, 16, 17 is rendered opaque by any suitable method such as for example by painting or the application of a thin ceramic layer which is fired on to the glass surface by a known process. The bottom opaque margin 17 on the glass is of greater width for a purpose which will become apparent later.

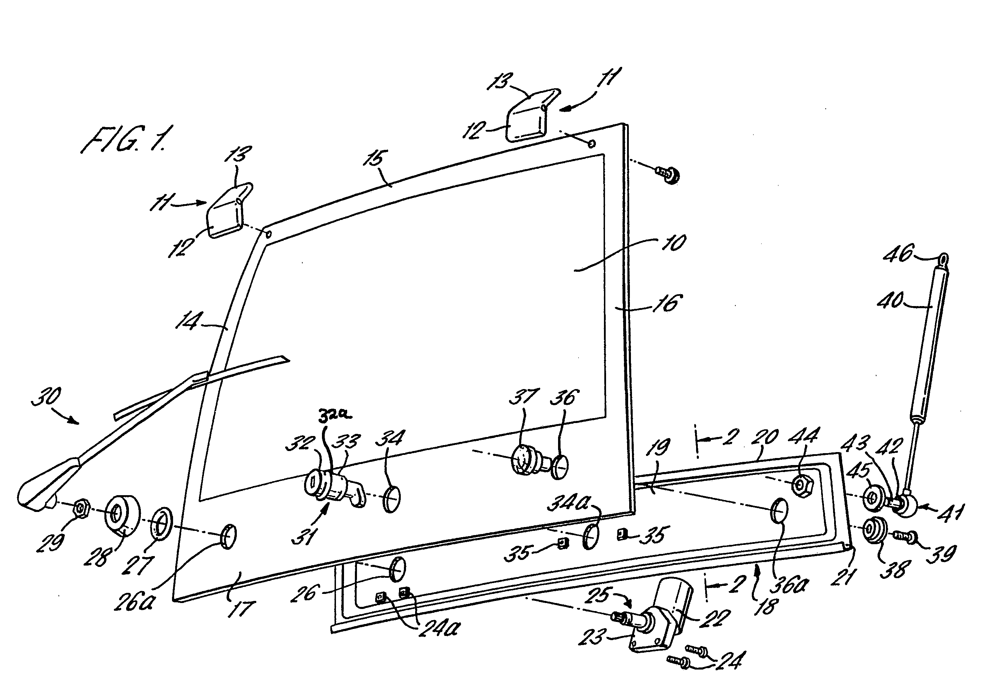

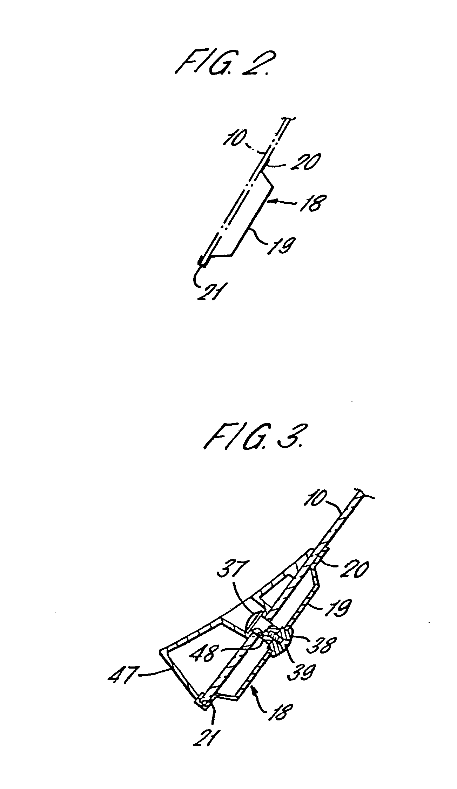

The lower marginal edge of the glass 17 is reinforced along its length by an elongate metal member 18 formed with a shallow recess 19 providing a dished area and a peripheral flange 20. The flange 20 along one longer side of the member is formed into a U-section channel 21 such that with the member located on the underside of the glass, the peripheral flange 20 abuts the glass and the U-section 21 is engaged over the lower edge of the glass as shown in Figure 2. In this position, the member is masked from external view by the width of the opaque bottom margin 17 on the glass 10.

A tailgate wiper electric motor 22 has a mounting flange 23 which is secured to the external surface of the member 18 of the rail by two screws 24 engaging into nuts 24a located in the recess 19 in the member and secured to the base by welding. A wiper spindle and hub 25 extends from the motor and passes through holes 26, 26a in the base and glass respectively at one end thereof such that the spindle and a screw threaded end of the spindle housing protrudes through the glass. A resilient sealing ring 27 and cover ring 28 is engaged over the spindle housing protruding from the glass and are secured thereon by a nut 29 engaged over a screw-threaded end portion of the spindle housing. A wiper arm and blade assembly 30 is secured to the end of the spindle in an orthodox manner. Means to provide electrical current to drive the motor 22 may comprise a suitable contact plate arrangement (not shown) which is opened when the tailgate is lifted, this arrangement may also be utilised to provide electrical current to the elements of a heater if fitted to the glass 10 of the tailgate.

A lock barrel assembly 31 has a head 32 providing a shoulder 32a which bears on the glass and a screw-threaded shank 33 engages through holes 34, 34a, in the glass and rail respectively located substantially midway along the length of the rail such that the end of the lock barrel assembly protrudes through the member and is engaged by a nut (not shown) to secure the lock barrel to the glass and rail. An axial extension of the lock barrel spindle engages a latch assembly (not shown) secured to the exterior surface of the member 18 by screws engaging nuts 35 welded to the member 18 in the recess 19. At the other end of the rail remote from the wiper motor 22, hole 36 in the glass is in register with hole 36a in the base of the rail and a mushroom headed plug 37 has a shank internally screw-threaded (not shown) for part of its length towards the head engaging in hole 36 whilst a shouldered mushroom headed collar 38 engages in hole 36a, the two elements being secured together by screw 39 engaging through the collar 38 in the internally screw-threaded shank of the plug 37 to secure that end of the member 18 to the glass, whilst the methods of mounting the lock barrel and wiper motor performs similar functions at spaced intervals along the member. Means to counter-balance the weight of the tailgate when it is being pivoted upwardly comprises a telescopic gas spring strut 40 located adjacent one edge of the tailgate at the lower end thereof, the lower end of the strut terminating in a ball joint 41, the ball part of which comprises a hexagonal shoulder 42 and screw-threaded shank 43 which engages into a nut 44 welded or clinched to the member 18 in the recess 19, a washer 45 being first fitted over the screw-threaded shank 42. The other end 46 of the strut is pivotably connected to the vehicle body structure.

In all cases where there are elements passing through the glass 10, waterproofing is effected by suitable means such as resilient washers interposed between the exterior of the glass and the appropriate part of the element.

It will be appreciated that various modifications can be made to the specific embodiments described hereinbefore.

For example, in the case where a tailgate wiper and motor is not fitted, the member 18 can be secured to the glass 10 at that end by a further plug 37, collar 38, and screw 39 engaged through holes 26, 26a the contact plate hitherto being used *inter alia* for supplying electrical current to the wiper motor can be deleted and the gas spring strut can then be used as a conductor for supplying electric current to the tailgate glass heater elements in a manner known *per se*. Additionally, the location of the lock barrel assembly in holes 34, 34a, and the plug 31 and collar 37 in holes 35, 35a may be reversed, the latch being operated by the lock barrel assembly and the lid of the lock barrel assembly protruding from the member being suitably designed for this purpose.

In the case where a rear spoiler is considered desirable this can easily be achieved as shown for example in Figure 3 wherein the spoiler comprises a single rigid plastics mounting 47 having suitably recessed holes 48 to permit the attachment of the member and units thereon as described hereinbefore. Other arrangements are possible utilising for example, reinforcement base plates to which the spoiler is attached. In any case, a suitable aperture would be provided in the spoiler to permit a jet of washing fluid to pass therethrough on to the glass 10. Two gas spring struts may be fixed to the tailgate, one at each side thereof instead of a single strut on one side only of the tailgate as described above.

## Claims

1. A vehicle tailgate assembly comprising a frameless glass tailgate panel (10), hinge means (11) attached directly to the glass adjacent one edge (15) of the panel to hinge the panel in the tailgate aperture of the vehicle and a locking device (31) disposed adjacent an opposite edge (17) of the panel for locking the panel in the closed position in the tailgate aperture, characterised in that a mounting member (18) is provided which extends along the length of the inner side of said opposite edge (17) of the panel and in that the locking device (31) is provided with means (33) for securing the mounting member (18) to the panel (10).

2. A vehicle tailgate assembly as claimed in claim 1, characterised in that one or more door fittings are mounted on the mounting member (18).

3. A vehicle tailgate assembly as claimed in claim 2, characterised in that one or more of the fittings have mountings which both mount the fittings on the mounting member (18) and secure the mounting member to the glass panel (10).

4. A vehicle tailgate assembly as claimed in any of the preceding claims characterised in that a lock barrel (31) extends through the glass panel (10) and mounting member (18), the barrel having a shoulder which engages the outer side of the glass panel, and a screw threaded shank (33) which extends through the glass panel and the mounting member and receives a nut which secures the barrel to the panel and member and secures the panel and member together.

5. A vehicle tailgate assembly as claimed in claim 4, characterised in that a latch assembly is mounted on the outer side of the mounting member and an element of the lock barrel projects into the latch assembly to operate the latch.

6. A vehicle tailgate assembly as claimed in any of the preceding claims characterised in that a window wiper drive (25) is mounted on the outer side of the mounting member (18) and has a hub projecting through openings (26, 26a) in the mounting member and the glass panel to receive a nut (29) which secures the hub, panel and mounting member together, a drive spindle projecting through the hub carrying a windscreen wiper arm (30) on which a wiper blade is mounted for wiping the outer surface of the panel (10).

7. A vehicle tailgate assembly as claimed in any of the preceding claims characterised in that at least one fastening device (37, 38, 39) is provided which extends through the glass panel and mounting member to assist in securing the member to the panel.

8. A vehicle tailgate assembly as claimed in any of the preceding claims characterised in that means (44) are provided on the mounting member for attachment of at least one counter balance strut (40) for counter-balancing the tailgate panel in the open position.

9. A vehicle tailgate assembly as claimed in claim 8 characterised in that attachment means for an end of the counter-balance strut comprises a nut (44) fixed to the mounting member into which a screw threaded shank (43) projecting from a ball joint (41) at one end of a counter balance strut (40) is secured.

10. A vehicle tailgate assembly as claimed in any of the preceding claims, characterised in that the mounting member comprises an elongate member (18) extending the length of the said opposite edge (17) of the glass panel (10) having a main dished area (19) and a peripheral flange (20) encircling the dished area which engages the glass so that the dished area is spaced from the panel, the attachment means for one or more fittings being located in the dished area and the area (17) of the glass panel over which the mounting member extends being rendered opaque so that the fitting attachments are not visible through the panel.

11. A vehicle tailgate assembly as claimed in claim 10, characterised in that the mounting member has a channel (21) extending along the rim of one side thereof which engages around the adjacent edge of the glass panel (10).

**Patentansprüche**

1. Eine Rückwandtüranordnung für ein Fahrzeug, die eine rahmenlose Glasrückwandtürscheibe (10) und Scharnierteile (11) enthält, die direkt an dem Glas befestigt sind, und zwar im Bereich einer Kante (15) der Scheibe, um die Scheibe in der Rückwandtüranordnung des Fahrzeuges schwenkbar zu machen, und eine Schließvorrichtung (31), die an der gegenüberliegenden Kante (17) der Scheibe angeordnet ist, um die Scheibe in der geschlossenen Position der Rückwandtüröffnung verschliessen zu können, dadurch gekennzeichnet, daß ein Halterungsteil (18) vorgesehen ist, welches sich über die Länge der Innenseite der genannten gegenüberliegenden Kante (17) der Scheibe erstreckt und daß die Schließvorrichtung (31) mit Teilen (33) versehen ist, um das Halterungsteil (18) mit der Scheibe (10) fest zu verbinden.

2. Eine Rückwandtüranordnung für ein Fahrzeug nach Anspruch 1, dadurch gekennzeichnet, daß ein oder mehrere Zubehörteile am Halterungsteil (18) festgemacht werden.

3. Eine Rückwandtüranordnung für ein Fahrzeug nach Anspruch 2, dadurch gekennzeichnet, daß ein oder mehrere Zubehörteile Befestigungsteile haben, die sowohl die Zubehörteile an dem Halterungsteil (18) befestigen und gleichzeitig das Halterungsteil mit der Glasscheibe (10) fest verbinden.

4. Eine Rückwandtüranordnung für ein Fahrzeug nach irgendwelchen der vorangehenden Ansprüche, dadurch gekennzeichnet, daß ein Schließzylinder (31) sich durch die Glasscheibe (10) und das Halterungsteil (18) erstreckt, wobei der Zylinder eine Schulter hat, die in Eingriff mit der Außenseite der Glasscheibe steht und einen mit Schraubengewinde versehenen Schaft (33), welcher ebenfalls durch die Glasscheibe und das Halterungsteil reicht und eine Überwurfmutter trägt, welche den Zylinder an die Scheibe und das Halterungsteil befestigt und die Scheibe und das Halterungsteil gegenseitig sichert.

5. Eine Rückwandtüranordnung für ein Fahrzeug nach Anspruch 4, dadurch gekennzeichnet, daß eine Sperranordnung an der Außenseite des Halterungsteils befestigt ist und ein Teil des Schließzylinders in die Sperranordnung vorsteht, um die Sperre zu betätigen.

6. Eine Rückwandtüranordnung für ein Fahrzeug nach irgendwelchen der vorangehenden Ansprüche, dadurch gekennzeichnet, daß ein Scheibenwischerantrieb (25) an der Außenseite des Halterungsteils (18) befestigt ist und eine Nabe hat, die durch die Öffnungen (26) und (26a) in den Halterungsteil und durch die Glasscheibe hindurch ragt und eine Mutter (29) trägt, welche Nabe, Scheibe und Halterungsteil zusammenhält, wobei eine Antriebsspindel durch die Nabe hindurchragt, an der ein Scheibenwischerarm (30) befestigt ist, der Wischerblätter trägt, um die Außenseite der Scheibe (10) zu wischen.

7. Eine Rückwandtüranordnung für ein Fahrzeug nach irgendwelchen der vorhergehenden Ansprüche, dadurch gekennzeichnet, daß mindestens eine Befestigungsvorrichtung (37, 38, 39) durch die Glasscheibe und den Halterungsteil durchreicht, um die Verbindung von Halterungsteil und Scheibe zu unterstützen.

8. Eine Rückwandtüranordnung für ein Fahrzeug nach irgendwelchen der vorhergehenden Ansprüche, dadurch gekennzeichnet, daß der Halterungsteil mit Teilen (44) zur Befestigung mindestens mit einer Ausgleichsstrebe (40) versehen ist, die zum Ausbalancieren der Rückwandtürscheibe in der offenen Position dient.

9. Eine Rückwandtüranordnung für ein Fahrzeug nach Anspruch 8, dadurch gekennzeichnet, daß Befestigungsteile für ein Ende der Ausgleichsstrebe eine Mutter (44) haben, welche an dem Halterungsteil befestigt ist und in welcher ein gewindeförmiger Schaft (43) befestigt ist, der aus einem Kugelgelenk (41) an einem Ende einer Ausgleichsstrebe (40) herausragt.

10. Eine Rückwandtüranordnung für ein Fahrzeug nach irgendwelchen der vorhergehenden Ansprüche, dadurch gekennzeichnet, daß das Halterungsteil ein längliches Teil (18) umfaßt, welches sich längs der gegenüberliegenden Kante (17) der Glasscheibe (10) erstreckt und eine tellerförmige Hauptfläche (19) sowie einen die Hauptfläche umlaufenden, peripheren Flansch (20) aufweist, welcher an dem Glas anliegt und zwar derart, daß die tellerförmige Fläche im Abstand von der Scheibe liegt, wobei Anbauteile für ein oder mehrere Zubehörteile in der tellerförmigen Fläche und in der Fläche (17) der Glasscheibe untergebracht sind, über welcher sich der Halterungsteil erstreckt und die Fläche (17) der Glasscheibe undurchsichtig ist, so daß die Befestigungsteile durch die Scheibe nicht sichtbar sind.

11. Eine Rückwandtüranordnung für ein Fahrzeug nach Anspruch 10, dadurch gekennzeichnet, daß das Halterungsteil längs seines einen Randes eine Rinne (21) hat, welche die angrenzende Kante der Glasscheibe (10) umgreift.

**Revendications**

1. Assemblage pour hayon de véhicule comprenant un panneau de hayon en verre sans armature (10), un moyen formant charnière (11) attaché directement au verre à proximité d'un bord (15) du panneau pour articuler le panneau dans l'ouverture du hayon du véhicule et un dispositif de verrouillage (31) disposé adjacent à un bord opposé (17) du panneau pour bloquer le panneau à la position fermée dans l'ouverture du hayon, caractérisé en ce qu'un organe de montage (18) est prévu qui s'étend sur la longueur du côté interne dudit bord opposé (17) du panneau et en ce que le dispositif de verrouillage (31) est pourvu d'un moyen (33) pour fixer l'organe de montage (18) au panneau (10).

2. Assemblage pour hayon de véhicule selon la revendication 1, caractérisé en ce qu'un ou plusieurs accessoires de portière sont montés sur l'organe de montage (18).

3. Assemblage pour hayon de véhicule selon la revendication 2, caractérisé en ce qu'un ou plusieurs des accessoires ont des montages qui maintiennent à la fois les accessoires sur l'organe de montage (18) et qui fixent l'organe de montage sur le panneau en verre (10).

4. Assemblage pour hayon de véhicule selon l'une quelconque des revendications précédentes, caractérisé en ce qu'un barillet de serrure (31) traverse le panneau en verre (10) et l'organe de montage (18), le barillet ayant un épaulement qui engage le côté externe du panneau en verre, et une tige filetée (33) qui traverse le panneau en verre et l'organe de montage et qui reçoit un écrou qui maintient le barillet au panneau et à l'organe et qui fixe le panneau et l'organe l'un à l'autre.

5. Assemblage pour hayon de véhicule selon la revendication 4, caractérisé en ce qu'un ensemble de verrouillage est monté sur le côté externe de l'organe de montage et un élément du barillet de serrure fait saillie dans l'ensemble de verrouillage pour faire fonctionner le verrouillage.

6. Assemblage pour hayon de véhicule selon l'une quelconque des revendications précédentes, caractérisé en ce qu'un entraînement (25) d'un essuie-glace est monté sur le côté externe de l'organe de montage (18) et a un moyeu qui fait saillie à travers des ouvertures (26, 26a) dans l'organe de montage et le panneau de verre pour recevoir un écrou (29) qui maintient le moyeu, le panneau et l'organe de montage, une broche d'entraînement faisant saillie à travers le moyeu portant un balai d'essuie-glace (30) sur lequel est montée une raclette d'essuie-glace pour essuyer la surface externe du panneau (10).

7. Assemblage pour hayon de véhicule selon l'une quelconque des revendications précédentes, caractérisé en ce qu'au moins un dispositif de fixation (37, 38, 39) est prévu qui traverse le panneau de verre et l'organe de montage pour aider à fixer l'organe au panneau.

8. Assemblage pour hayon de véhicule selon l'une quelconque des revendications précédentes, caractérisé en ce que des moyens (44) sont prévus sur l'organe de montage pour la fixation d'au moins un tirant (40) d'équilibrage pour équilibrer le panneau du hayon en position ouverte.

9. Assemblage pour hayon de véhicule selon la revendication 8, caractérisé en ce qu'un moyen de fixation d'une extrémité du tirant d'équilibrage comprend un écrou (44) fixé à l'organe de montage dans lequel une tige filetée (43) faisant saillie d'un joint à rotule (41) à une extrémité d'un tirant d'équilibrage (40) est fixée.

10. Assemblage pour hayon de véhicule selon l'une quelconque des revendications précédentes, caractérisé en ce que l'organe de montage comprend un organe allongé (18) qui s'étend sur la longueur dudit bord opposé (17) du panneau en verre (10), ayant une zone principale en creux (19) et une bride périphérique (20) entourant la zone en creux qui engage le verre de façon que la zone en creux soit espacée du panneau, le moyen de fixation d'un ou plusieurs accessoires se trouvant dans la zone en creux et la zone (17) du panneau de verre sur laquelle s'étend l'organe de montage étant rendue opaque de façon que les fixations des accessoires ne soient pas visibles à travers le panneau.

11. Assemblage pour hayon de véhicule selon la revendication 10, caractérisé en ce que l'organe de montage a une gorge (21) qui s'étend le long du pourtour d'un côté qui engage le bord adjacent du panneau en verre (10).

FIG. 1.

0 044 649

FIG. 2.

FIG. 3.